# EUROPEAN PATENT SPECIFICATION

(11) **EP 4 168 370 B1**
(45) Date of publication and mention of the grant of the patent: **26.06.2024**
(21) Application number: 21729583.1
(22) Date of filing: 07.06.2021
(51) Int. Cl.: C04B 28/04, C04B 24/04, C04B 28/06, C04B 103/20

(54) **HYDRATION CONTROL MIXTURE FOR MORTAR AND CEMENT COMPOSITIONS**
HYDRIERUNGSSTEUERUNGSMISCHUNG FÜR MÖRTEL- UND ZEMENTZUSAMMENSETZUNGEN
MÉLANGE RÉGULATEUR D'HYDRATATION POUR COMPOSITIONS DE MORTIER ET DE CIMENT

(30) Priority: 18.06.2020 EP 20180655
(43) Date of publication of application: 26.04.2023
(73) Proprietor: BASF SE, 67056 Ludwigshafen am Rhein (DE)
(72) Inventor: GRASSL, Harald, 83308 Trostberg (DE); DENGLER, Joachim, 83308 Trostberg (DE); BIZZOZERO, Julien, 83308 Trostberg (DE); SCHOEBEL, Alexander, 83308 Trostberg (DE)
(74) Representative: BASF IP Association
(86) International application number: PCT/EP2021/065102
(87) International publication number: WO 2021/254802

(56) References cited:
- WO-A1-2017/212044
- US-A- 5 556 458

## Description

The present invention concerns a construction chemical composition, comprising an inorganic binder and a hydration control mixture and the use of the hydration control mixture as a retarder for at least one inorganic binder, comprising an aluminate-containing binder.

Dry mortars of the prior art often have the disadvantage that they are not satisfying in relation to flowability and development of compressive strength, shrinkage and final strength. To overcome these disadvantages aluminate-containing components are added. Due to the rapidly occurring aluminate reaction the open time of the cement slurries is significantly reduced and unacceptable for suitable processability. Consequently, retarders for the aluminate reaction have to be added. The retarders, however, suppress the silicate reaction which can therefore not contribute to strength development. Silicate reaction means the hydration of anhydrous silicates such as tricalcium silicate (C₃S) and dicalcium silicate (C₂S) under formation of portlandite and/or calcium-silicate-hydrate.

WO2017212044 relates to a mixture comprising at least one compound comprising an α-hydroxy-carboxylic unit, α-hydroxy-sulfonic acid unit or α-carbonyl-carboxylic unit and at least one water-soluble organic carbonate. The mixture is useful as a hydration control agent in construction chemical compositions comprising an inorganic binder.

The problem underlying the present invention was to provide a construction chemical composition comprising an improved hydration control additive. The composition should show an improved shelf life and further a sufficient open time (time until initial setting), a good processability (workability) during said open time (characterized for example by constant flow over time) and fast setting. The composition should also provide an improved compressive strength within the first 24 h of setting as compared to the use of the retarders of the prior art.

This problem is solved by providing a construction chemical composition comprising
a) at least one inorganic binder,
b) less than 0,5 weight-%, based on the total amount of a), b) and c), of at least one compound of the general formula I 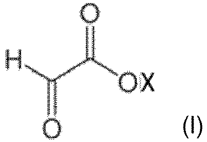 wherein
   X is selected from H or a cation equivalent Kₐ wherein K is selected from an alkali metal, alkaline earth metal, zinc, iron, ammonium or phosphonium cation and a is 1/n wherein n is the valency of the cation; and
c) at least one alkali metal carbonate
   wherein the composition does not comprise polyhydroxy compound B and/or salts or esters thereof, wherein the polyhydroxy compound B is selected from polyalcohols with a carbon to oxygen ratio of from C/O ≥ 1 to C/O ≤ 1.5 and mixtures thereof
   and wherein the composition does not comprise a water-soluble organic carbonate.

A preferred compound that is useful as component b) is represented by formula I, wherein X is in particular sodium, potassium, hydrogen or a mixture thereof.

### Component c)

Component c) is at least one alkali metal carbonate. According to the present invention the term "alkali metal carbonate" also comprises alkali metal hydrogen carbonate.

The compounds of component c) are commercially available.

In a preferred embodiment, the compound c) is preferably selected from potassium carbonate, sodium carbonate, lithium carbonate, potassium hydrogen carbonate, sodium hydrogen carbonate, lithium hydrogen carbonate and mixtures thereof.

The solubility of component c) in water is preferably above 0.1 g/mol at 20 °C and normal pressure.

In a preferred embodiment, the construction chemical composition of the invention does not comprise a water-soluble organic carbonate. In a further preferred embodiment, the construction chemical composition of the invention does not comprise borax.

The weight ratio of component b) to component c) is in general in the range from about 5:1 to about 1:1000, in particular about 2:1 to about 1:500 or about 1:1 to about 1:200 or about 1:1 to about 1:20.

In an embodiment the composition comprises between 0,001 and 0,4 percent by weight of component b) and between 0,1 and 10 percent by weight of component c), based on the total amount of a), b) and c), more preferably between 0,005 and 0,3 percent by weight of component b) and between 0,3 and 3 percent by weight of component c), based on the total amount of a), b) and c), preferably between 0,01 and 0,2 percent by weight of component b) and between 0,1 and 2 percent by weight of component c), based on the total amount of a), b) and c).

In an embodiment, the composition of the invention additionally contains at least one further additive. Such additives are, for example alkali metal sulfates, dispersants, in particular polymeric dispersants and fillers. The additives are described in greater detail below.

In a preferred embodiment, the construction chemical composition of the invention additionally comprises fillers.

Preferably, the additives are selected from fillers which can act as carrier for the components b) and c), for example limestone powder (containing CaCOs, MgCOs, CaMg(CO₃)₂ ), layered silicates like kaolin or bentonite or metakaolin and polymeric dispersants such as a polycarboxylate ether, a phosphorylated polycondensation product or a sulfonic acid and/or sulfonate group containing dispersant and mixtures thereof.

In an embodiment, the inorganic binder a) is selected from calciumsulfate hemihydrate, anhydrite, a latent hydraulic binder, a pozzolanic binder and/or aluminate-containing cement.

In one embodiment the aluminate-containing cement means that the cement contains aluminate phases such as tricalcium aluminate (C₃A), monocalcium aluminate (CA), tetra aluminate ferrate (C₄AF), dodecacalcium heptaaluminate (C₁₂A₇), yeelimite (C₄A₃s) etc. The amount of alumina (in form of Al₂O₃) is ≥ 1 % by weight of the total mass of the aluminate-containing cement as determined by means of X-ray fluorescence (XRF).

In another embodiment, the aluminate-containing cement is a mixture of CEM cement and aluminate cement, in particular a mixture of CEM cement and high alumina cement or a mixture of CEM cement and sulfoaluminate cement or a mixture of CEM cement, high alumina cement and sulfoaluminate cement. CEM cement is a cement in accordance with the CEM classification as set forth for example in DIN EN 197-1. A preferred cement is ordinary Portland cement (OPC) according to DIN EN 197-1 which may either contain calcium sulfate (<7% by weight) or is essentiallly free of calcium sulfate (<1% by weight). Another preferred cement is sulfoaluminate cement (calcium sulfoaluminate cement, CSA) or high alumina cement (HAC) according to DIN EN 14647 or a mixture of ordinary Portland cement and aluminate cement, in particular a mixture of ordinary Portland cement and high alumina cement or a mixture of ordinary Portland cement and sulfoaluminate cement or a mixture of ordinary Portland cement, high alumina cement and sulfoaluminate cement. In a further preferred embodiment the aluminate-containing cement is CEM cement in accordance with CEM classification as set forth in DIN EN 197-1.

It has been surprisingly found that the mixture of components b) and c) is useful as a retarder for the hydration of anhydrous inorganic binders resulting in the formation of hydrate phases connected with the hardening of the inorganic binders. In the case of calcium sulfate hemihydrate and anhydrite the formation of gypsum is influenced by the mixture of components b) and c). In the case of aluminate-containing cements the hydration control mixture is influencing the aluminate reaction. Aluminate reaction means the hydration of aluminate-containing clinker phases like for example tricalcium aluminate (C₃A), monocalcium aluminate (CA), tetra aluminate ferrate (C₄AF), dodecacalcium heptaaluminate (C₁₂A₇), yeelimite (C₄A₃) under formation of calcium aluminate hydrates. The hydration reactions are described in Lea's Chemistry of Cement and Concrete (4th edition), 2007 on pages 241-274 (hydration of Portland cement) and 722-735 (hydration of calcium aluminate cement). The hydration reaction of aluminate-containing clinker phases is retarded which is required to avoid a too rapid setting of mortar and concrete pastes and to ensure a sufficient open time which allows processing the pastes as desired.

In an embodiment, where the construction chemical compositions contain an aluminate-containing cement, the compositions may additionally contain at least one calcium sulfate which is selected from the group consisting of calcium sulfate dihydrate, anhydrite, α- and β-hemihydrate, i.e. α-bassanite and β-bassanite, or mixtures thereof. Preferably the calcium sulfate is α-bassanite and/or β-bassanite. In general, calcium sulfate is comprised in an amount of about 1 to about 20 wt%, based on the weight of the aluminate-containing cement.

In an embodiment, the construction chemical compositions additionally contain at least one alkali metal sulfate like potassium sulfate or sodium sulfate, in particular in case the inorganic binder is calciumsulfate hemihydrate or anhydrite.

In another embodiment, the construction chemical compositions additionally contain at least one alkaline earth metal carbonate, in particular magnesium carbonate, calcium carbonate and/or a mixed calcium-magnesium carbonate (CaMg(CO₃)₂. The alkaline earth metal carbonates may be present in X-ray amorphous form. The alkaline earth metal carbonates may be present in an amount in the range from about 0.05 to about 15 wt%, based on the weight of the inorganic binder.

For the purposes of the present invention, a "latent hydraulic binder" is preferably a binder in which the molar ratio (CaO + MgO) : SiO₂ is from 0.8 to 2.5 and particularly from 1.0 to 2.0. In general terms, the above-mentioned latent hydraulic binders can be selected from industrial and/or synthetic slag, in particular from blast furnace slag, electrothermal phosphorous slag, steel slag and mixtures thereof, and the "pozzolanic binders" can generally be selected from amorphous silica, preferably precipitated silica, fumed silica and microsilica, ground glass, metakaolin, aluminosilicates, fly ash, preferably brown-coal fly ash and hard-coal fly ash, natural pozzolans such as tuff, trass and volcanic ash, natural and synthetic zeolites and mixtures thereof.

The slag can be either industrial slag, i.e. waste products from industrial processes, or else synthetic slag. The latter can be advantageous because industrial slag is not always available in consistent quantity and quality.

Blast furnace slag (BFS) is a waste product of the glass furnace process. Other materials are granulated blast furnace slag (GBFS) and ground granulated blast furnace slag (GGBFS), which is granulated blast furnace slag that has been finely pulverized. Ground granulated blast furnace slag varies in terms of grinding fineness and grain size distribution, which depend on origin and treatment method, and grinding fineness influences reactivity here. The Blaine value is used as parameter for grinding fineness, and typically has an order of magnitude of from 200 to 1000 m² kg⁻¹, preferably from 300 to 500 m² kg⁻¹. Finer milling gives higher reactivity.

For the purposes of the present invention, the expression "blast furnace slag" is however intended to comprise materials resulting from all of the levels of treatment, milling, and quality mentioned (i.e. BFS, GBFS and GGBFS). Blast furnace slag generally comprises from 30 to 45% by weight of CaO, about 4 to 17% by weight of MgO, about 30 to 45% by weight of SiO₂ and about 5 to 15% by weight of Al₂O₃, typically about 40% by weight of CaO, about 10% by weight of MgO, about 35% by weight of SiO₂ and about 12% by weight of Al₂O₃.

Electrothermal phosphorous slag is a waste product of electrothermal phosphorous production. It is less reactive than blast furnace slag and comprises about 45 to 50% by weight of CaO, about 0.5 to 3% by weight of MgO, about 38 to 43% by weight of SiO₂, about 2 to 5% by weight of Al₂O₃ and about 0.2 to 3% by weight of Fe₂O₃, and also fluoride and phosphate. Steel slag is a waste product of various steel production processes with greatly varying composition.

Amorphous silica is preferably an X-ray-amorphous silica, i.e. a silica for which the powder diffraction method reveals no crystallinity. The content of SiO₂ in the amorphous silica of the invention is advantageously at least 80% by weight, preferably at least 90% by weight. Precipitated silica is obtained on an industrial scale by way of precipitating processes starting from water glass. Precipitated silica from some production processes is also called silica gel.

Fumed silica is produced via reaction of chlorosilanes, for example silicon tetrachloride, in a hydrogen/oxygen flame. Fumed silica is an amorphous SiO₂ powder of particle diameter from 5 to 50 nm with specific surface area of from 50 to 600 m²g⁻¹.

Microsilica is a by-product of silicon production or ferrosilicon production, and likewise consists mostly of amorphous SiO₂ powder. The particles have diameters of the order of magnitude of 0.1 µm. Specific surface area is of the order of magnitude of from 15 to 30 m²g⁻¹.

Fly ash is produced inter alia during the combustion of coal in power stations. Class C fly ash (brown-coal fly ash) comprises according to WO 08/012438 about 10% by weight of CaO, whereas class F fly ash (hard-coal fly ash) comprises less than 8% by weight, preferably less than 4% by weight, and typically about 2% by weight of CaO.

Metakaolin is produced when kaolin is dehydrated. Whereas at from 100 to 200°C kaolin releases physically bound water, at from 500 to 800°C a dehydroxylation takes place, with collapse of the lattice structure and formation of metakaolin (Al₂Si₂O₇). Accordingly, pure metakaolin comprises about 54% by weight of SiO₂ and about 46% by weight of Al₂O₃.

For the purposes of the present invention, aluminosilicates are the abovementioned reactive compounds based on SiO₂ in conjunction with Al₂O₃ which harden in an aqueous alkali environment. It is of course not essential here that silicon and aluminium are present in oxidic form, as is the case by way of example in Al₂Si₂O₇. However, for the purposes of quantitative chemical analysis of aluminosilicates it is usual to state the proportions of silicon and aluminium in oxidic form (i.e. as "SiO₂" and "Al₂O₃").

In an embodiment, the latent hydraulic binder is selected from the group consisting of blast furnace slag, microsilica, metakaolin, aluminosilicates, fly ash and mixtures thereof.

In one further embodiment the construction chemical composition of the invention does not comprise fly ash.

The latent hydraulic binder is, in general, comprised preferably in an amount in the range from about 1 to about 30 wt%, based on the weight of the aluminate-containing cement.

In one preferred embodiment the construction chemical composition of the invention, additionally comprising at least one compound selected from
- polycarboxylic acids or salts thereof whose milliequivalent number of carboxyl groups is 5.00 meq/g or higher, preferably 5.00 to 15.00 meq/g, assuming all the carboxyl groups to be in unneutralized form;
- phosphonates which comprise two or three phosphonate groups and no carboxyl groups; and
- α-hydroxy carboxylic acids or salts thereof;
- a polyhydroxycompound with a carbon to oxygen ratio of C/O > 1.5;
- a polyhydroxycompound with a carbon to oxygen ratio of C/O < 1.0;
- and mixtures thereof.

In one preferred embodiment, the compound is a α-hydroxy carboxylic acids or salts thereof, preferably gluconic acid or a salt thereof.

Preferably, the compositions or formulations comprise at least one dispersant for calciumsulfate hemihydrate, anhydrite and/or the aluminate-containing cement. In an embodiment, the dispersant is a polymeric dispersant, which has anionic and/or anionogenic groups and polyether side chains, which preferably comprise polyalkylene glycol side chains. The anionic and/or anionogenic groups and the polyether side chains are preferably attached to the backbone of the polymeric dispersant.

The dispersants are in this case more preferably selected from the group of polycarboxylate ethers (PCEs), the anionic group being in the case of PCEs carboxylic groups and/or carboxylate groups, and phosphorylated polycondensates. Most preferable are the polycarboxylate ethers (PCEs).

The PCE is preferably produced by the radical copolymerization of a polyether macromonomer and an acid monomer in a way that at least 45 mol-%, preferably at least 80 mol-% of all structural units of the copolymer were formed by copolymerization of the polyether macromonomer and the acid monomer. The term acid monomer means in particular a monomer comprising anionic and/or anionogenic groups. The term polyether macromonomer means in particular a monomer comprising at least two ether groups, preferably at least two alkylene glycol groups.

The polymeric dispersant preferably comprises as anionic and/or anionogenic group at least one structural unit of the general formulae (Ia), (Ib), (Ic) and/or (Id): 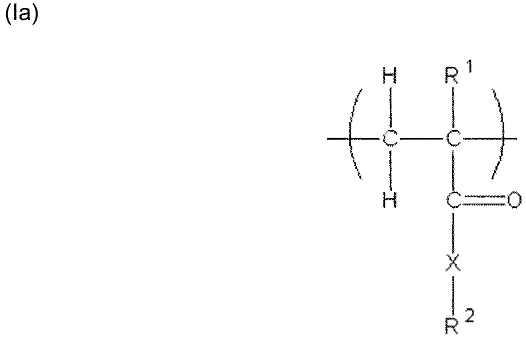 in which
- R¹: is H or an unbranched or branched C₁-C₄ alkyl group, CH₂COOH or CH₂CO-X-R³;
- X: is NH-(CₙH₂ₙ) or O-(CₙH₂ₙ) with n = 1, 2, 3 or 4, or is a chemical bond, where the nitrogen atom or the oxygen atom is bonded to the CO group;
- R²: is OM, PO₃M₂, or O-PO₃M₂; with the proviso that X is a chemical bond if R² is OM;
- R³: is PO₃M₂, or O-PO₃M₂; 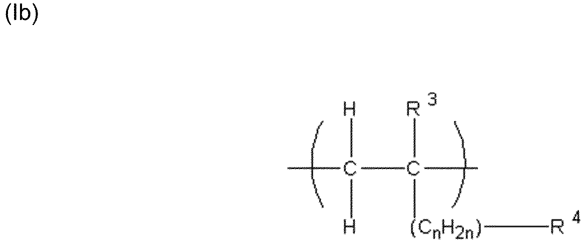
in which
- R³: is H or an unbranched or branched C₁-C₄ alkyl group;
- n: is 0, 1, 2, 3 or 4;
- R⁴: is PO₃M₂, or O-PO₃M₂; 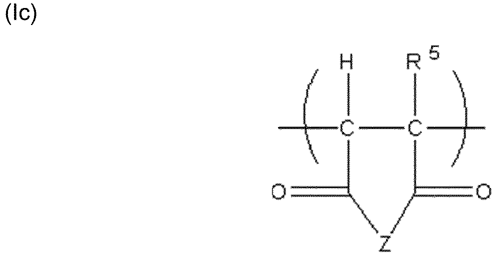
in which
- R⁵: is H or an unbranched or branched C₁-C₄ alkyl group;
- Z: is O or NR⁷;
- R⁷: is H, (CₙH₂ₙ)-OH, (CₙH₂ₙ)-PO₃M₂, (CₙH₂ₙ)-OPO₃M₂, (C₆H₄)-PO₃M₂, or (C₆H₄)-OPO₃M₂, and
- n: is 1, 2, 3 or 4; 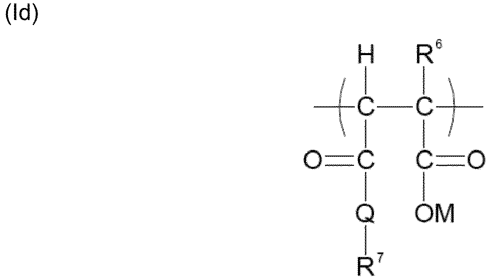
in which
- R⁶: is H or an unbranched or branched C₁-C₄ alkyl group;
- Q: is NR⁷ or O;
- R⁷: is H, (CₙH₂ₙ)-OH, (CₙH₂ₙ)-PO₃M₂, (CₙH₂ₙ)-OPO₃M₂, (C₆H₄)-PO₃M₂, or (C₆H₄)-OPO₃M₂,
- N: is 1, 2, 3 or 4; and
where each M independently of any other is H or a cation equivalent.

Preferable is a composition where the polymeric dispersant comprises as polyether side chain at least one structural unit of the general formulae (Ila), (IIb), (IIc) and/or (IId): 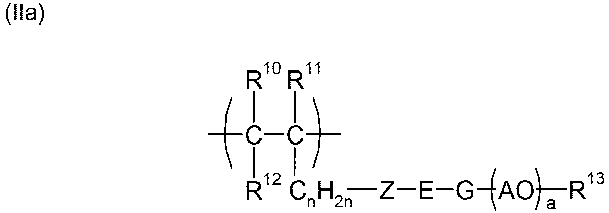 in which
- R¹⁰, R¹¹ and R¹²: independently of one another are H or an unbranched or branched C₁-C₄ alkyl group;
- Z: is O or S;
- E: is an unbranched or branched C₁-C₆ alkylene group, a cyclohexylene group, CH₂-C₆H₁₀, 1,2-phenylene, 1,3-phenylene or 1,4-phenylene;
- G: is O, NH or CO-NH; or
- E and G: together are a chemical bond;
- A: is an unbranched or branched alkylene with 2, 3, 4 or 5 carbon atoms or CH₂CH(C₆H₅);
- n: is 0, 1, 2, 3, 4 or 5;
- a: is an integer from 2 to 350;
- R¹³: is H, an unbranched or branched C₁-C₄ alkyl group, CO-NH₂ or COCH₃; 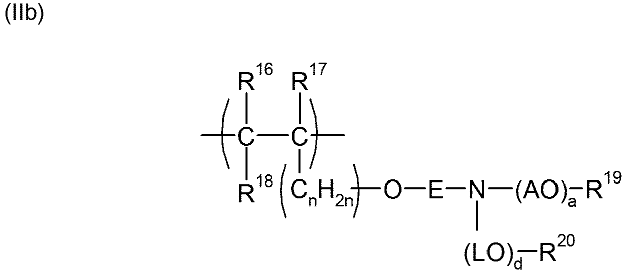
in which
- R¹⁶, R¹⁷ and R¹⁸: independently of one another are H or an unbranched or branched C₁-C₄ alkyl group;
- E: is an unbranched or branched C₁-C₆ alkylene group, a cyclohexylene group, CH₂-C₆H₁₀, 1,2-phenylene, 1,3-phenylene, or 1,4-phenylene, or is a chemical bond;
- A: is an unbranched or branched alkylene with 2, 3, 4 or 5 carbon atoms or CH₂CH(C₆H₅);
- n: is 0, 1, 2, 3, 4 and/or 5;
- L: is CₓH₂ₓ with x = 2, 3, 4 or 5, or is CH₂CH(C₆H₅);
- a: is an integer from 2 to 350;
- d: is an integer from 1 to 350;
- R¹⁹: is H or an unbranched or branched C₁-C₄ alkyl group;
- R²⁰: is H or an unbranched C₁-C₄ alkyl group; and
- n: is 0, 1, 2, 3, 4 or 5; 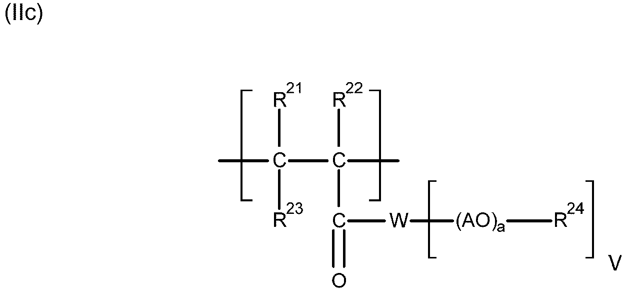
in which
- R²¹, R²² and R²³: independently of one another are H or an unbranched or branched C₁-C₄ alkyl group;
- W: is O, NR²⁵, or is N;
- V: is 1 ifW = O orNR²⁵, and is 2 ifW = N;
- A: is an unbranched or branched alkylene with 2 to 5 carbon atoms or CH₂CH(C₆H₅);
- a: is an integer from 2 to 350;
- R²⁴: is H or an unbranched or branched C₁-C₄ alkyl group;
- R²⁵: is H or an unbranched or branched C₁-C₄ alkyl group; 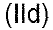
in which
- R⁶: is H or an unbranched or branched C₁-C₄ alkyl group;
- Q: is NR¹⁰, N or O;
- V: is 1 ifW = O orNR¹⁰ andis2 ifW = N;
- R¹⁰: is H or an unbranched or branched C₁-C₄ alkyl group;
- A: is an unbranched or branched alkyllene with 2 to 5 carbon atoms or CH₂CH(C₆H₅); and
- a: is an integer from 2 to 350.

The polymeric dispersants comprising structural units (I) and (II) can be prepared by conventional methods, for example by free radical polymerization. The preparation of the dispersants is, for example, described in EP0894811, EP1851256, EP2463314, and EP0753488.

In an embodiment, the polymeric dispersant is a phosphorylated polycondensation product comprising structural units (III) and (IV): 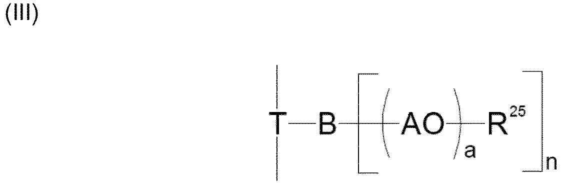 in which
- T: is a substituted or unsubstituted phenyl or naphthyl radical or a substituted or unsubstituted heteroaromatic radical having 5 to 10 ring atoms, of which 1 or 2 atoms are heteroatoms selected from N, O and S;
- n: is 1 or 2;
- B: is N, NH or O, with the proviso that n is 2 if B is N and with the proviso that n is 1 if B is NH or O;
- A: is an unbranched or branched alkylene with 2 to 5 carbon atoms or CH₂CH(C₆H₅);
- a: is an integer from 1 to 300;

R²⁵ is H, a branched or unbranched C₁ to C₁₀ alkyl radical, C₅ to C₈ cycloalkyl radical, aryl radical, or heteroaryl radical having 5 to 10 ring atoms, of which 1 or 2 atoms are heteroatoms selected from N, O and S;
where the structural unit (IV) is selected from the structural units (IVa) and (lVb): 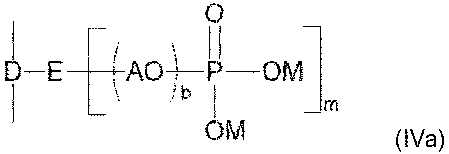
in which
   - D: is a substituted or unsubstituted phenyl or naphthyl radical or a substituted or unsubstituted heteroaromatic radical having 5 to 10 ring atoms, of which 1 or 2 atoms are heteroatoms selected from N, O and S;
   - E: is N, NH or O, with the proviso that m is 2 if E is N and with the proviso that m is 1 if E is NH or O;
   - A: is an unbranched or branched alkylene with 2 to 5 carbon atoms or CH₂CH(C₆H₅);
   - b: is an integer from 0 to 300;
   - M: independently at each occurrence is H or a cation equivalent; 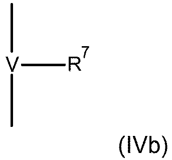
in which
   - V: is a substituted or unsubstituted phenyl or naphthyl radical and is optionally substituted by 1 or two radicals selected from R⁸, OH, OR⁸, (CO)R⁸, COOM, COOR⁸, SO₃R⁸ and NO₂;
   - R⁷: is COOM, OCH₂COOM, SO₃M or OPO₃M₂;
   - M: is H or a cation equivalent; and
   - R⁸: is C₁-C₄ alkyl, phenyl, naphthyl, phenyl-C₁-C₄ alkyl or C₁-C₄ alkylphenyl.

The polymeric dispersants comprising structural units (III) and (IV) can be prepared by conventional methods. The preparation of the phosphorylated polycondensation product is, for example, described in WO 2006/042709 and WO 2010/040612.

In a preferred embodiment, the dispersant is a polymer comprising a sulfonic acid and/or sulfonate group. In an embodiment, the polymeric dispersant comprising sulfonic acids and/or sulfonates and is selected from the group consisting of lignosulfonates (LGS), melamine formaldehyde sulfonate condensates (MFS), β-naphthalene sulfonic acid condensates (BNS), sulfonated ketone-formaldehyde-condensates and copolymers comprising sulfo group containing units and/or sulfonate group-containing units and carboxylic acid and/or carboxylate group- containing units.

The lignosulfonates used as polymeric sulfonated dispersants are products, which are obtained as by-products of the paper industry. Such products are described in Ullmann's Encyclopedia of industrial Chemistry, 5th Ed., Vol. A8, pages 586, 587. They comprise units of the strongly simplified and idealized formula 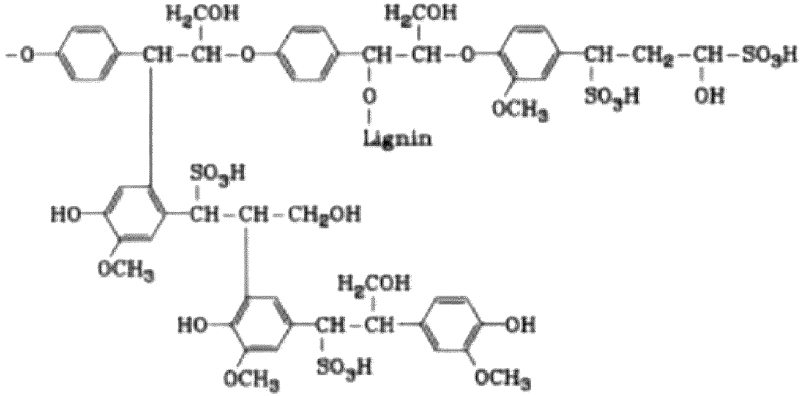 wherein n is usually 5 to 500. Lignosulfonates have usually molecular weights between 2.000 and 100.000 g/mol. Generally they are present in the form of their sodium-, calcium-, and/or magnesium salts. Examples for suitable lignosulfonates are the products marketed under the trade name Borresperse of the Norwegian company Borregaard LignoTech.

The melamine-formaldehyde-sulfonate condensates (also called MFS-resins) and their preparation are for example described in CA 2 172 004 A1, DE 44 11 797 A1, US 4,430,469, US 6,555,683 and CH 686 186, as well as in "Ullmann's Encyclopedia of Industrial Chemistry, 5th Ed., Vol. A2, page 131" and "Concrete Admixtures Handbook -Properties, Science and Technology, 2nd Ed., pages 411, 412". Preferred melamine-formaldehyde-sulfonate condensates comprise (strongly simplified and idealized) units of the formula 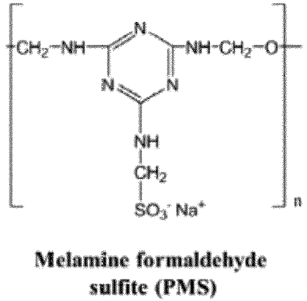 wherein n is typically a number from 10 to 300. The molecular weight is preferably in the region from 2.500 to 80.000 g/mol. An example for melamine-formaldehyde-sulfonate condensates are products marketed by the company BASF Construction Solutions GmbH under the trade name Melment^{®}.

In addition to the sulfonated melamine units additional monomers can be co-condensated. In particular urea is suitable. Furthermore aromatic building units like gallic acid, aminobenzene sulfonic acid, sulfanilic acid, phenol sulfonic acid, aniline, ammonium benzoic acid, dialkoxybenzene sulfonic acid, dialkoxybenzoic acid, pyridine, pyridine monosulfonic acid, pyridine disulfonic acid, pyridine carboxylic acid and pyridine dicarboxylic acid can be co-condensated into the melamine-formaldehyde-sulfonate condensates.

The sulfonated ketone-formaldehyde are products in which as ketone component a mono- or diketone is used. Preferably acetone, butanone, pentanone, hexanone or cyclohexanone are built into the polymer. Such condensates are known and for example described in WO 2009/103579. Preferable are sulfonated acetone-formaldehyde-condensates. They comprise typically units of the formula (according to J. Plank et al., J. Appl. Poly. Sci. 2009, 2018 - 2024): 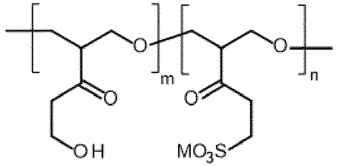 wherein m and n are typically an integer from 10 to 250, M is an alkali metall ion, for example Na⁺, and the ratio of m:n is generally in the region from about 3:1 to about 1:3, in particular from about 1,2:1 to about 1:1,2. Examples for suitable acetone-formaldehyde-condensates are products, which are marketed by the company BASF Construction Solutions GmbH under the trade name Melcret^{®} K1L.

Furthermore aromatic building units like gallic acid, aminobenzene sulfonic acid, sulfanilic acid, phenol sulfonic acid, aniline, ammonium benzoic acid, dialkoxybenzene sulfonic acid, dialkoxybenzoic acid, pyridine, pyridine monosulfonic acid, pyridine disulfonic acid, pyridine carboxylic acid and pyridine dicarboxylic acid can be co-condensated.

The β-naphthaline-formaldehyde-condensates (BNS) are products, which are obtained by a sulfonation of naphthaline and followed by a polycondensation with formaldehyde. Such products are described amongst others in "Concrete Admixtures Handbook -Properties, Science and Technology, 2nd Ed., pages 411-413" and "Ullmann's Encyclopedia of Industrial Chemistry, 5th Ed., Vol. A8, pages 587, 588". They comprise units of the formula

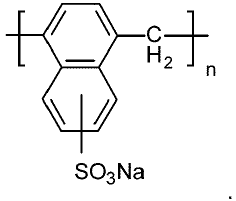

Typically the molecular weight (M_{w}) is from 1.000 to 50.000 g/mol.

Examples for suitable β-naphthaline-formaldehyde-condensates are the products marketed by the company BASF Construction Solutions GmbH under the trade name Melcret^{®} 500 L. Furthermore aromatic building units like gallic acid, aminobenzene sulfonic acid, sulfanilic acid, phenol sulfonic acid, aniline, ammonium benzoic acid, dialkoxybenzene sulfonic acid, dialkoxybenzoic acid, pyridine, pyridine monosulfonic acid, pyridine disulfonic acid, pyridine carboxylic acid and pyridine dicarboxylic acid can be co-condensated.

In a further embodiment, the dispersant is a copolymer comprising sulfo group containing units and/or sulfonate group-containing units and carboxylic acid and/or carboxylate group-containing units. In an embodiment, the sulfo or sulfonate group containing units are units derived from vinylsulfonic acid, methallylsulfonic acid, 4-vinylphenylsulfonic acid or are sulfonic acid-containing structural units of formula 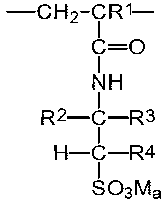 wherein
- R¹: represents hydrogen or methyl
- R², R³ and R⁴: independently of each other represent hydrogen, straight or branched C₁-C₆-alkyl or C₆-C₁₄-aryl,
- M: represents hydrogen, a metal cation, preferably a monovalent or divalent metal cation, or an ammonium cation
- a: represents 1 or 1/valency of the cation, preferably ½ or 1.

Preferred sulfo group containing units are derived from monomers selected from vinylsulfonic acid, methallylsulfonic acid, and 2-acrylamido-2-methylpropylsulfonic acid (AMPS) with AMPS being particularly preferred.

The carboxylic acid or carboxylate containing units are preferably derived from monomers selected from acrylic acid, methacrylic acid, 2-ethylacrylic acid, vinyl acetic acid, crotonic acid, maleic acid, fumaric acid, itaconic acid, citraconic acid, and in particular acrylic acid and methacrylic acid.

The sulfo group containing copolymer in general has a molecular weight M_{w} in the range from 1000 to 50.000, preferably 1500 to 30.000, as determined by aqueous gel permeation chromatography.

In an embodiment, the molar ratio between the sulfo group containing units and carboxylic acids containing units is, in general, in the range from 5:1 to 1:5, preferably 4:1 to 1:4.

Preferably the (co)polymer having carboxylic acid groups and/or carboxylate groups and sulfonic acid groups and/or sulfonate groups has a main polymer chain of carbon atoms and the ratio of the sum of the number of carboxylic acid groups and/or carboxylate groups and sulfonic acid groups and/or sulfonate groups to the number of carbon atoms in the main polymer chain is in the range from 0.1 to 0.6, preferably from 0.2 to 0.55. Preferably said (co)polymer can be obtained from a free-radical (co)polymerisation and the carboxylic acid groups and/or carboxylate groups are derived from monocarboxylic acid monomers. Preferred is a (co)polymer, which can be obtained from a free-radical (co)polymerisation and the carboxylic acid groups and/or carboxylate groups are derived from the monomers acrylic acid and/or methacrylic acid and the sulfonic acid groups and/or sulfonate groups are derived from 2-acrylamido-2-methylpropanesulfonic acid. Preferably the weight average molecular weight M_{w} of the (co)polymer(s) is from 8 000 g/mol to 200 000 g/mol, preferably from 10 000 to 50 000 g/mol.

It is also possible to use mixtures of the before mentioned dispersants, for example mixtures of lignosulfonates (LGS), melamine formaldehyde sulfonate condensates (MFS), beta-naphthalene sulfonic acid condensates (BNS), copolymer comprising sulfo group containing units and/or sulfonate group-containing units and carboxylic acid and/or carboxylate group-containing units, sulfonated keton-formaldehyde-condensates, polycarboxylate ethers (PCE), and/or phosphorylated polycondensates. A preferred mixture comprises copolymers comprising sulfo group containing units and/or sulfonate group-containing units and carboxylic acid and/or carboxylate group-containing units and/or phosphorylated polycondensates.

In an embodiment, the dispersant is a) a non-ionic copolymer for extending workability to the construction chemical compositions in the form of a paste (cementitious mixture), wherein the copolymer comprises residues of at least the following monomers: Component A comprising an ethylenically unsaturated carboxylic acid ester monomer comprising a moiety hydrolysable in the cementitious mixture, wherein the hydrolysed monomer residue comprises an active binding site for a component of the cementitious mixture; and Component B comprising an ethylenically unsaturated carboxylic acid ester or alkenyl ether monomer comprising at least one C₂₋₄ oxyalkylene side group of 1 to 350 units or b) a phosphonate-containing polymer of the formula

R-(OA)ₙ-N-[CH₂-PO(OM₂)₂]₂

wherein
R is H or a saturated or unsaturated hydrocarbon group, preferably a C₁ to C₁₅ radical,
A is the same or different and independently from each other an alkylene with 2 to 18 carbon atoms, preferably ethylene and/ or propylene, most preferably ethylene,
N is an integer from 5 to 500, preferably 10 to 200, most preferably 10 to 100, and
M is H, an alkali metal, ½ alkaline earth metal and/ or amine.

In an embodiment, the construction chemical compositions additionally include conventional retarders, such as citric acid, tartaric acid, etc.

In another embodiment, the compositions comprise at least one hardening accelerator. A preferred hardening accelerator is a calcium-silicate-hydrate (CSH) based hardening accelerator for compositions comprising OPC.

The calcium-silicate-hydrate may contain foreign ions, such as magnesium and aluminium. The calcium-silicate-hydrate can be preferably described with regard to its composition by the following empirical formula:
a CaO, SiO₂, b Al₂O₃, c H₂O, d X, e W
X is an alkali metal
W is an alkaline earth metal

| | | |
|---|---|---|
| 0.1 ≤ a ≤ 2 | preferably | 0.66 ≤ a ≤ 1.8 |
| 0<_b<_1 | preferably | 0 ≤ b ≤ 0.1 |
| 1 ≤ c ≤ 6 | preferably | 1 ≤ c ≤ 6.0 |
| 0 ≤ d ≤ 1 | preferably | 0 ≤ d ≤ 0.4 or 0.2 |
| 0 ≤ e ≤ 2 | preferably | 0 ≤ e ≤ 0.1 |

Calcium-silicate-hydrate can be obtained preferably by reaction of a calcium compound with a silicate compound, preferably in the presence of a polycarboxylate ether (PCE). Such products containing calcium-silicate-hydrate are for example described in WO 2010/026155 A1, EP 14198721, WO 2014/114784 or WO 2014/114782.

Preferable is a composition, preferably dry mortar composition, in which the calcium-silicate-hydrate based hardening accelerator for cementitious compositions is a powder product. Powder products are advantageous as they are naturally high in contents of calcium-silicate-hydrate. In particular there are no compatibility problems with for example cement or other hydraulic binders, which might react with water from the aqueous calcium-silicate-hydrate containing suspension during storage.

The water content of the calcium-silicate-hydrate based hardening accelerator in powder form is preferably from 0.1 weight % to 5.5 weight % with respect to the total weight of the powder sample. Said water content is measured by putting a sample into a drying chamber at 80 °C until the weight of the sample becomes constant. The difference in weight of the sample before and after the drying treatment is the weight of water contained in the sample. The water content (%) is calculated as the weight of water contained in the sample divided with the weight of the sample.

A composition is preferred in which the calcium-silicate-hydrate based hardening accelerator is an aqueous suspension. The water content of the aqueous suspension is preferably from 10 weight % to 95 weight %, preferably from 40 weight % to 90 weight %, more preferably from 50 weight % to 85 weight %, in each case the percentage is given with respect to the total weight of the aqueous suspension sample. The water content is determined in an analogous way as described in the before standing text by use of a drying chamber.

Further useful hardening accelerators for aluminate-containing cements are calcium formate, calcium nitrate, calcium chloride, calcium hydroxide, lithium carbonate and lithium sulfate.

Further useful hardening accelerators for inorganic binders selected from calciumsulfate hemihydrate and/or anhydrite are potassium sulfate, sodium sulfate and ground gypsum (known to the skilled person as ball mill accelerator).

The construction chemical composition may additionally contain an essentially aluminate-free cement, anionic starch ethers, cellulose ethers, a redispersible polymer powder, fillers or a mixture of two or more thereof. The term "essentially free" means here less than 5 wt%, preferably less than 3 wt% and in particular less than 1 wt%, based on the weight of the aluminate-containing cement.

An anionic starch ether is in particular carboxymethyl starch ether. Cellulose ethers are preferably selected from the group consisting of methylcellulose, ethylcellulose, propylcellulose, methylethylcellulose, hydroxyethylcellulose (HEC), hydroxypropylcellulose (HPC), hydroxyethylhydroxypropylcellulose, methylhydroxyethylcelluose (MHEC), methylhydroxypropylcelluose (MHPC) and propylhydroxypropylcellulose or mixtures of two or more thereof and in particular from the group consisting of carboxymethyl cellulose, methyl cellulose, methyl hydroxypropyl cellulose, methyl hydroxyethyl cellulose or mixtures of two or more thereof.

Redispersible polymer powders are preferably selected from the group consisting of vinyl acetate polymer, vinyl acetate-ethylene copolymer, vinyl acetate-vinyl ester copolymer and/or vinyl acetate-vinyl ester-ethylene copolymer, with the vinyl ester monomers in each case being selected from the group consisting of vinyl laurate, vinyl pivalate and vinyl versatates, vinyl acetate-acrylic ester copolymer, vinyl acetate-acrylic ester-ethylene copolymer, styrenebutadiene copolymer and styrene-acrylic ester copolymer, with the acrylic esters in each case being esters with branched or linear alcohols containing from 1 to 10 carbon atoms and in particular from the group consisting of styrene acrylate copolymer, polyvinyl acetate, styrene butadiene copolymer or mixtures of two or more thereof.

Fillers are preferably inert materials, which do not act as binder and basically do not dissolve in water. The solubility in water is preferably below 3 g/l at 20 °C and normal pressure. Preferred fillers are limestone, quartz flower, sand, silica dust, silicic acid, calcium silicate, layered silicates such as kaolin or bentonite, basalt powder, gravel and crushed stone. Fillers can be preferably present in the composition from 1 weight % to 80 weight %, preferably from 10 weight % to 80 weight %, more preferably 30 weight % to 70 weight % with respect to the total weight of the composition.

In an embodiment, the construction chemical composition is in form of a powder mixture.

The content of a) in the construction chemical composition is preferably between 10 - 95 wt.-%, based on the dry components.

In another embodiment, the invention relates to a construction chemical composition wherein component a) is an aluminate-containing cement.

In another embodiment, the invention relates to a construction chemical composition wherein component a) is ordinary Portland cement.

In another embodiment, the invention relates to a construction chemical composition wherein component a) is calcium sulfate hemihydrate or anhydcerite.

In another embodiment, the invention relates to a construction chemical composition wherein component a) is a1) ordinary Portland cement and a2) aluminate cement, in particular high alumina cement and sulfoaluminate cement and mixtures thereof.

In another embodiment, the invention relates to a construction chemical composition wherein component a) is a1) ordinary Portland cement and a2) aluminate cement, in particular high alumina cement and sulfoaluminate cement and mixtures thereof; and a3) calcium sulfate, in particular calcium sulfate dihydrate, calcium sulfate hemihydrate or anhydrite.

The invention also concerns the use of
b) less than 0,5 weight-%, based on the total amount of a), b) and c), of at least one compound of the general formula I 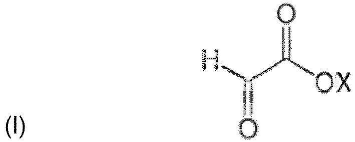
wherein
X is selected from H or a cation equivalent Kₐ wherein K is selected from an alkali metal, alkaline earth metal, zinc, iron, ammonium or phosphonium cation and a is 1/n wherein n is the valency of the cation; and
c) at least one alkali metal carbonate
as a retarder for
   a) at least one inorganic binder, comprising an aluminate-containing binder
in building products, in particular for concretes such as on-site concrete, finished concrete parts, pre-cast concrete parts, concrete goods, cast concrete stones, concrete bricks, in-situ concrete, sprayed concrete (shotcrete), ready-mix concrete, air-placed concrete, concrete repair systems, industrial cement flooring, one-component and two-component sealing slurries, screeds, filling and self-levelling compositions, such as joint fillers or self-levelling underlayments, adhesives, such as building or construction adhesives, thermal insulation composite system adhesives, tile adhesives, renders, plasters, adhesives, sealants, coating and paint systems, in particular for tunnels, waste water drains, splash protection and condensate lines, screeds, mortars, such as dry mortars, sag resistant, flowable or self-levelling mortars, drainage mortars, or repair mortars, grouts, such as joint grouts, non shrink grouts, tile grouts, wind-mill grouts, anchor grouts, flowable or self-levelling grouts, ETICS (external thermal insulation composite systems), EIFS grouts (Exterior Insulation Finishing Systems, swelling explosives, waterproofing membranes or cementitious foams
wherein the composition does not comprise polyhydroxy compound B and/or salts or esters thereof, wherein the polyhydroxy compound B is selected from polyalcohols with a carbon to oxygen ratio of from C/O ≥ 1 to C/O ≤ 1.5 and mixtures thereof
and wherein the composition does not comprise a water-soluble organic carbonate.

### Examples

### Example 1

The additive mixture comprising 0.12 % b.w.o.c. sodium glyoxylate and 0.7 % b.w.o.c. of sodium carbonate or propylene carbonate was added to dry mortar mixture comprising 1100 g Portland cement and 1650 g sand according to DIN EN 196-1 available from Normensand GmbH. After adding the mixing water (w/c = 0.35), the mortar mixture was mixed analogous to DIN EN 196-1 in a Toni-Mixer as follows:

| | |
|---|---|
| 0 - 60 s: | Rilem level 1 |
| 60 - 90 s: | Rilem level 2 |
| 90- 180 s: | Pause |
| 180 - 240 s: | Rilem level 2 |

The compressive strength was measured after 3 h, 5.5 h and 24 h at 4x4 cm prisms. At each time 3 prisms were tested and the average of the values was calculated.

The results are shown in the following table 1.

**Table 1**

| | | Compressive strength [MPa] | | |
|---|---|---|---|---|
| Ex.-No. | Additive | 3 h | 5,5 h | 24 h |
| 1 | sodium carbonate + sodium glyoxylate | 3,78 | 4,55 | 31,5 |
| Ref-1 | propylene carbonate + sodium glyoxylate | 1,20 | 1,23 | 30,2 |

The early compressive strength and the final compressive strength is improved in case of the additive comprising the Retardant 1 and glycerol in comparison to the use of Retardant 1 alone.

### Example 2

The additive mixture comprising 0.10 % b.w.o.c. sodium glyoxylate and 0.7 % b.w.o.c. of sodium carbonate or ethylene carbonate was added to dry mortar mixture comprising 1100 g Portland cement and 1650 g sand according to DIN EN 196-1 available from Normensand GmbH. After adding the mixing water (w/c = 0.35), the mortar mixture was mixed analogous to DIN EN 196-1 in a Toni-Mixer as follows:

| | |
|---|---|
| 0 - 60 s: | Rilem level 1 |
| 60 - 90 s: | Rilem level 2 |
| 90- 180 s: | Pause |
| 180 - 240 s: | Rilem level 2 |

The compressive strength was measured after 3 h and 24 h at 4x4 cm prisms. At each time 3 prisms were tested and the average of the values was calculated.

The results are shown in the following table 2.

**Table 2**

| | | Compressive strength [MPa] | |
|---|---|---|---|
| Ex.-No. | Additive | 3 h | 24 h |
| Ref-2 | ethylene carbonate + sodium glyoxylate | 0,37 | 26,17 |
| 2 | sodium carbonate + sodium glyoxylate | 1,99 | 32,17 |

The examples show that the use of organic carbonates leads to significantly lower compressive strengths.

### Example 3

In a further experiment, the storage of the dry mortar was simulated at elevated temperatures. The above additive mixture of Example 2 was added to the dry mortar. The dry mortar was stored at 60 °C for 72 hours. After the mortar had cooled, the mortar was mixed with the same amount of cement, sand and water as in Example 2. The following measured values were obtained:
The results are shown in the following table 3.

**Table 3**

| | | Compressive strength [MPa] | |
|---|---|---|---|
| Ex.-No. | Additive | 3 h | 24 h |
| Ref-3 | ethylene carbonate + sodium glyoxylate | 0,17 | 20,84 |
| 3 | sodium carbonate + sodium glyoxylate | 1,81 | 33,13 |

The example shows that the use of organic carbonate leads to significantly lower compressive strengths. The storage stability of inorganic carbonates is significantly better compared to organic carbonates.

### Example 4

In this example the influence of glyoxylic acid dosage is shown.

The additive mixture comprising the appropriate amount of glyoxylic acid (table 4), 1,926 g of a 35 % solution of a dispersant (a copolymer with a side chain 3000 g/mol of Polyethylene glycol and 10 equivalents of acrylic acid), 23,4 g of K₂CO₃ and 0,06 g of sodium gluconate was added to 1700 g Portland cement together with the mixing water. The water amount was adjusted to w/c= 0.35. The mixing protocol according to EN 1996-1 was applied. Initial and final setting time were measure according EN13279-2 using a Dettki automatic Vicat measuring system. Strenght was determined after 5.5 h and 24 h with 16x4x4 cm prisms. The results are shown in the following table 4.

**Table 4**

| Experiment | **Dosage Glyoxylic acid [% b.w.o.c]** | Initial setting time [min] | Final setting time [min] | 5.5 h compressive strenght [N/mm²] | 24 h compressive strenght [N/mm²] |
|---|---|---|---|---|---|
| 1 | **0.01** | 49 | 53 | 2,57 | 12,1 |
| 2 | **0.05** | 40 | 75 | 2,735 | 4,70 |
| 3 | **0.10** | 67 | 137 | 2,65 | 3,23 |
| 4 | **0.30** | 368 | 391 | n.m. | 3,17 |
| 5 | **0.5** | 612 | 845 | n.m. | n.m. |

| | | | | | |
|---|---|---|---|---|---|
| n.m. = not measurable | | | | | |

## Claims

1. A construction chemical composition comprising
a) at least one inorganic binder,
b) less than 0,5 weight-%, based on the total amount of a), b) and c), of at least one compound of the general formula I 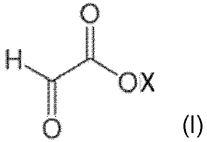 wherein
X is selected from H or a cation equivalent Kₐ wherein K is selected from an alkali metal, alkaline earth metal, zinc, iron, ammonium or phosphonium cation and a is 1/n wherein n is the valency of the cation; and
c) at least one alkali metal carbonate
wherein the composition does not comprise polyhydroxy compound B and/or salts or esters thereof, wherein the polyhydroxy compound B is selected from polyalcohols with a carbon to oxygen ratio of from C/O ≥ 1 to C/O ≤ 1.5 and mixtures thereof
and wherein the composition does not comprise a water-soluble organic carbonate.

2. The construction chemical composition of claim 1, wherein the weight ratio of component b) to component c) is in the range from 5:1 to about 1:1000.

3. The construction chemical composition of claim 1, wherein the mixture comprises between 0,001 and 0,4 percent by weight of component b) and between 0,1 and 10 percent by weight of component c), based on the total amount of a), b) and c).

4. The construction chemical composition of any one of claims 1 to 3, wherein the inorganic binder a) is selected from calciumsulfate hemihydrate, anhydrite, a latent hydraulic binder, a pozzolanic binder and/or aluminate-containing cement.

5. The construction chemical composition of claim 4, wherein the aluminate-containing cement is CEM cement in accordance with CEM classification as set forth in DIN EN 197-1.

6. The construction chemical composition of claim 4, wherein the aluminate-containing cement is a mixture of CEM cement and aluminate cement, in particular a mixture of CEM cement and high alumina cement or a mixture of CEM cement and sulfoaluminate cement or a mixture of CEM cement, high alumina cement and sulfoaluminate cement.

7. The construction chemical composition of any one of claims 1 to 6, additionally comprising at least one dispersant, selected from polycarboxylate ether, a phosphorylated polycondensation product or a sulfonic acid and/or sulfonate group containing dispersant and mixtures thereof.

8. The construction chemical composition of any one of claims 1 to 7, additionally comprising at least one compound selected from
- polycarboxylic acids or salts thereof whose milliequivalent number of carboxyl groups is 5.00 meq/g or higher, preferably 5.00 to 15.00 meq/g, assuming all the carboxyl groups to be in unneutralized form;
- phosphonates which comprise two or three phosphonate groups and no carboxyl groups; and
- α-hydroxy carboxylic acids or salts thereof;
- a polyhydroxycompound with a carbon to oxygen ratio of C/O > 1.5;
- a polyhydroxycompound with a carbon to oxygen ratio of C/O < 1.0;
- and mixtures thereof.

9. The construction chemical composition according to claim 8, wherein the compound is a α-hydroxy carboxylic acid or salts thereof, preferably gluconic acid or a salt thereof.

10. The construction chemical composition of any one of claims 1 to 9, additionally comprising fillers.

11. The use of
b) less than 0,5 weight-%, based on the total amount of a), b) and c), of at least one compound of the general formula I 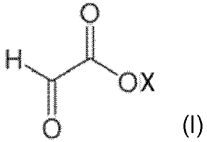 wherein
X is selected from H or a cation equivalent Kₐ wherein K is selected from an alkali metal, alkaline earth metal, zinc, iron, ammonium or phosphonium cation and a is 1/n wherein n is the valency of the cation; and
c) at least one alkali metal carbonate
as a retarder for
a) at least one inorganic binder, comprising an aluminate-containing binder
in building products, in particular for concretes such as on-site concrete, finished concrete parts, pre-cast concrete parts, concrete goods, cast concrete stones, concrete bricks, in-situ concrete, sprayed concrete (shotcrete), ready-mix concrete, air-placed concrete, concrete repair systems, industrial cement flooring, one-component and two-component sealing slurries, screeds, filling and self-levelling compositions, such as joint fillers or self-levelling underlayments, adhesives, such as building or construction adhesives, thermal insulation composite system adhesives, tile adhesives, renders, plasters, adhesives, sealants, coating and paint systems, in particular for tunnels, waste water drains, splash protection and condensate lines, screeds, mortars, such as dry mortars, sag resistant, flowable or self-levelling mortars, drainage mortars, or repair mortars, grouts, such as joint grouts, non shrink grouts, tile grouts, wind-mill grouts, anchor grouts, flowable or self-levelling grouts, ETICS (external thermal insulation composite systems), EIFS grouts (Exterior Insulation Finishing Systems, swelling explosives, waterproofing membranes or cementitious foams,
wherein the composition does not comprise polyhydroxy compound B and/or salts or esters thereof, wherein the polyhydroxy compound B is selected from polyalcohols with a carbon to oxygen ratio of from C/O ≥ 1 to C/O ≤ 1.5 and mixtures thereof
and wherein the composition does not comprise a water-soluble organic carbonate.

## Patentansprüche

1. Bauchemische Zusammensetzung umfassend
a) wenigstens ein anorganisches Bindemittel,
b) weniger als 0,5 Gew.-%, bezogen auf die Gesamtmenge von a), b) und c), an wenigstens einer Verbindung der allgemeinen Formel I, 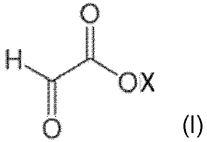 wobei
X ausgewählt ist aus H und einem Kationenäquivalent Kₐ, wobei K ausgewählt ist aus einem Alkalimetall-, Erdalkalimetall-, Zink-, Eisen-, Ammonium- oder Phosphonium-Kation, und a 1/n ist, wobei n die Wertigkeit des Kations ist; und
c) wenigstens ein Alkalimetallcarbonat,
wobei die Zusammensetzung keine Polyhydroxyverbindung B und/oder Salze oder Ester davon umfasst, wobei die Polyhydroxyverbindung B ausgewählt ist aus Polyalkoholen mit einem Kohlenstoff-zu-Sauerstoff-Verhältnis von C/O ≥ 1 bis C/0 ≤ 1,5 und Gemischen davon,
und wobei die Zusammensetzung kein wasserlösliches organisches Carbonat umfasst.

2. Bauchemische Zusammensetzung gemäß Anspruch 1, wobei das Gewichtsverhältnis von Komponente b) zu Komponente c) in dem Bereich von etwa 5:1 bis etwa 1:1000 liegt.

3. Bauchemische Zusammensetzung gemäß Anspruch 1, wobei das Gemisch zwischen 0,001 und 0,4 Gewichtsprozent an Komponente b) und zwischen 0,1 und 10 Gewichtsprozent an Komponente c), bezogen auf die Gesamtmenge von a), b) und c), umfasst.

4. Bauchemische Zusammensetzung gemäß einem der Ansprüche 1 bis 3, wobei das anorganische Bindemittel a) ausgewählt ist aus Calciumsulfathemihydrat, Anhydrit, einem latenten hydraulischen Bindemittel, einem puzzolanischen Bindemittel und/oder aluminathaltigem Zement.

5. Bauchemische Zusammensetzung gemäß Anspruch 4, wobei der aluminathaltige Zement CEM-Zement gemäß CEM-Einstufung nach DIN EN 197-1 ist.

6. Bauchemische Zusammensetzung gemäß Anspruch 4, wobei der aluminathaltige Zement ein Gemisch von CEM-Zement und Aluminatzement ist, insbesondere ein Gemisch von CEM-Zement und und Zement mit hohem Aluminiumoxidgehalt oder ein Gemisch von CEM-Zement und Sulfoaluminatzement oder ein ein Gemisch von CEM-Zement, Zement mit hohem Aluminiumoxidgehalt und Sulfoaluminatzement.

7. Bauchemische Zusammensetzung gemäß einem der Ansprüche 1 bis 6, zusätzlich umfassend wenigstens ein Dispergiermittel ausgewählt aus Polycarboxylatether, einem phosphorylierten Polykondensationsprodukt oder einem Sulfonsäure- und/oder Sulfonatgruppe-enthaltenden Dispergiermittel und Gemischen davon.

8. Bauchemische Zusammensetzung gemäß einem der Ansprüche 1 bis 7, zusätzlich umfassend wenigstens eine Verbindung ausgewählt aus
- Polycarbonsäuren oder Salzen davon, deren Milliäquivalentzahl von Carboxygruppen 5,00 meq/g oder höher ist, vorzugsweise 5,00 bis 15,00 meq/g, unter der Annahme, dass alle Carboxygruppen in nicht neutralisierter Form vorliegen;
- Phosphonaten, die zwei oder mehr Phosphonatgruppen und keine Carboxygruppen umfassen; und
- α-Hydroxycarbonsäuren oder Salzen davon;
- einer Polyhydroxyverbindung mit einem Kohlenstoff-zu-Sauerstoff-Verhältnis von C/0 > 1,5;
- einer Polyhydroxyverbindung mit einem Kohlenstoff-zu-Sauerstoff-Verhältnis von C/0 < 1,0;
- und Gemischen davon.

9. Bauchemische Zusammensetzung gemäß Anspruch 8, wobei die Verbindung eine α-Hydroxycarbonsäuren oder Salze davon ist, vorzugsweise Gluconsäure oder ein Salz davon.

10. Bauchemische Zusammensetzung gemäß einem der Ansprüche 1 bis 9, zusätzlich umfassend Füllstoffe.

11. Verwendung von
b) weniger als 0,5 Gew.-%, bezogen auf die Gesamtmenge von a), b) und c), an wenigstens einer Verbindung der allgemeinen Formel I, 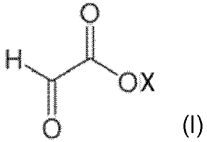 wobei
X ausgewählt ist aus H und einem Kationenäquivalent Kₐ, wobei K ausgewählt ist aus einem Alkalimetall-, Erdalkalimetall-, Zink-, Eisen-, Ammonium- oder Phosphonium-Kation, und a 1/n ist, wobei n die Wertigkeit des Kations ist; und
c) wenigstens einem Alkalimetallcarbonat,
als Verzögerer für
a) wenigstens ein anorganisches Bindemittel, umfassend ein aluminathaltiges Bindemittel,
in Bauprodukten, insbesondere für Betone, wie z.B. Ortbeton, Betonfertigteile, vorgegossene Betonteile, Betonwaren, Gussbetonsteine, Betonziegel, In-situ-Beton, Sprühbeton (Shotcrete), vorgemischten Beton, Spritzbeton, Betonreparatursysteme, industrielle Zementfußböden, Einkomponenten- und Zweikomponenten-Dichtungsaufschlämmungen, Estrich, Füll- und selbstnivellierende Zusammensetzungen, wie z.B. Fugenfüller und selbstnivellierende Unterlagen, Klebstoffe, wie z.B. Bau- oder Montagekleber, Wärmedämmungsverbundsystem-Kleber, Fliesenkleber, Putz, Gips, Klebstoffe, Dichtmittel, Beschichtungs- und Anstrichsysteme, insbesondere für Tunnel, Abwasserleitungen, Spritzschutz und Kondensatleitungen, Estrich, Mörtel, wie z.B. Trockenmörtel, nicht durchhängender, fließfähiger oder selbstnivellierender Mörtel, Drainagemörtel oder Reparaturmörtel, Fugenmaterial, wie z.B. Fugenmörtel, schrumpfungsfreie Mörtel, Fliesenmörtel, Windmühlenmörtel, Ankermörtel, fließfähige oder selbstnivellierende Mörtel, ETICS (Außenwärmedämmungsverbundsysteme), EIFS-Mörtel (Außendämmungsverkleidungssysteme), aufquellende Explosivstoffe, Dichtungsmembranen und zementhaltige Schäume,
wobei die Zusammensetzung keine Polyhydroxyverbindung B und/oder Salze oder Ester davon umfasst, wobei die Polyhydroxyverbindung B ausgewählt ist aus Polyalkoholen mit einem Kohlenstoff-zu-Sauerstoff-Verhältnis von C/0 ≥ 1 bis C/0 ≤ 1,5 und Gemischen davon,
und wobei die Zusammensetzung kein wasserlösliches organisches Carbonat umfasst.

## Revendications

1. Composition chimique de construction comprenant
a) au moins un liant inorganique,
b) moins de 0,5 % en poids, sur la base de la quantité totale de a), b) et c), d'au moins un composé de la formule générale I 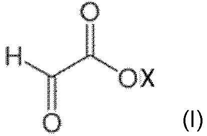 dans laquelle
X est sélectionné parmi H ou un équivalent cation Kₐ dans lequel K est sélectionné parmi un métal alcalin, un métal alcalino-terreux, le zinc, le fer, un cation ammonium ou phosphonium et a est 1/n, dans lequel n est la valence du cation ; et
c) au moins un carbonate de métal alcalin
dans laquelle la composition ne comprend pas de composé polyhydroxylé B et/ou de sels ou d'esters correspondants, dans laquelle le composé polyhydroxylé B est sélectionné parmi des polyalcools comportant un rapport carbone sur oxygène de C/O ≥ 1 à C/O ≤ 1,5 et des mélanges correspondants
et dans laquelle la composition ne comprend pas de carbonate organique soluble dans l'eau.

2. Composition chimique de construction selon la revendication 1, dans laquelle le rapport en poids du composant b) sur le composant c) est dans la plage de 5:1 à environ 1:1 000.

3. Composition chimique de construction selon la revendication 1, dans laquelle le mélange comprend entre 0,001 et 0,4 pour cent en poids du composant b) et entre 0,1 et 10 pour cent en poids du composant c), sur la base de la quantité totale de a), b) et c).

4. Composition chimique de construction selon l'une quelconque des revendications 1 à 3, dans laquelle le liant inorganique a) est sélectionné parmi l'hémihydrate de sulfate de calcium, l'anhydrite, un liant hydraulique latent, un liant pouzzolanique et/ou un ciment contenant de l'aluminate.

5. Composition chimique de construction selon la revendication 4, dans laquelle le ciment contenant de l'aluminate est un ciment CEM conformément à la classification CEM telle que définie dans la norme DIN EN 197-1.

6. Composition chimique de construction selon la revendication 4, dans laquelle le ciment contenant de l'aluminate est un mélange de ciment CEM et de ciment aluminate, en particulier un mélange de ciment CEM et de ciment à forte teneur en alumine ou un mélange de ciment CEM et de ciment sulfoaluminate ou un mélange de ciment CEM, d'un ciment à haute teneur en alumine et d'un ciment sulfoaluminate.

7. Composition chimique de construction selon l'une quelconque des revendications 1 à 6, comprenant en outre au moins un dispersant, sélectionné parmi un éther de polycarboxylate, un produit de polycondensation phosphorylé ou un dispersant contenant un groupe acide sulfonique et/ou sulfonate et des mélanges correspondants.

8. Composition chimique de construction selon l'une quelconque des revendications 1 à 7, comprenant de plus au moins un composé sélectionné parmi
- des acides polycarboxyliques ou des sels correspondants dont le nombre de milliéquivalents de groupes carboxyles est de 5,00 méq/g ou plus, de préférence 5,00 à 15,00 méq/g, en supposant que tous les groupes carboxyles sont sous forme non neutralisée ;
- des phosphonates qui comprennent deux ou trois groupes phosphonate et aucun groupe carboxyle ; et
- des acides α-hydroxycarboxyliques ou des sels correspondants ;
- un composé polyhydroxylé comportant un rapport carbone sur oxygène de C/0 > 1,5 ;
- un composé polyhydroxylé comportant un rapport carbone sur oxygène de C/0 < 1,0 ;
- et des mélanges correspondants.

9. Composition chimique de construction selon la revendication 8, dans laquelle le composé est un acide α-hydroxycarboxylique ou des sels correspondants, de préférence l'acide gluconique ou un sel correspondant.

10. Composition chimique de construction selon l'une quelconque des revendications 1 à 9, comprenant en outre des charges.

11. Utilisation de
b) moins de 0,5 % en poids, sur la base de la quantité totale de a), b) et c), d'au moins un composé de la formule générale I 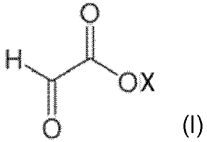 dans laquelle
X est sélectionné parmi H ou un équivalent cation Kₐ dans lequel K est sélectionné parmi un métal alcalin, un métal alcalino-terreux, le zinc, le fer, un cation ammonium ou phosphonium et a est 1/n, dans lequel n est la valence du cation ; et
c) au moins un carbonate de métal alcalin comme retardateur pour
a) au moins un liant inorganique, comprenant un liant contenant de l'aluminate
dans des produits de construction, en particulier pour les bétons tels que le béton coulé sur place, les éléments finis en béton, les éléments préfabriqués en béton, les produits en béton, les pierres en béton coulé, les briques en béton, le béton coulé sur place, le béton projeté (béton projeté), le béton prêt à l'emploi, les bétons projetés par air, les systèmes de réparation du béton, les sols industriels en ciment, les coulis de scellement monocomposants et bicomposants, les chapes, les compositions de remplissage et autonivelantes, telles que les mastics à joints ou les sous-couches autonivelantes, les adhésifs, tels que les mastics ou les adhésifs de construction, les adhésifs pour systèmes composites d'isolation thermique, les adhésifs à carrelage, les enduits, les plâtres, les adhésifs, les agents d'étanchéité, les systèmes de revêtement et de peinture, en particulier pour tunnels, les évacuations d'eaux usées, la protection contre les projections et les conduites de condensats, les chapes, les mortiers, tels que mortiers secs, les mortiers résistants à l'affaissement, fluides ou autonivelants, les mortiers de drainage ou les mortiers de réparation, les coulis, tels que les coulis de joints, les coulis sans retrait, les coulis de carrelage, les coulis d'éoliennes, les coulis d'ancrage, les coulis fluides ou autonivelants, les ETICS (systèmes composites d'isolation thermique externes), les coulis EIFS (systèmes de finition d'isolation extérieure), les explosifs gonflants, les membranes d'étanchéité ou les mousses cimentaires,
dans laquelle la composition ne comprend pas de composé polyhydroxylé B et/ou de sels ou d'esters correspondants, dans laquelle le composé polyhydroxylé B est sélectionné parmi des polyalcools comportant un rapport carbone sur oxygène de C/O ≥ 1 à C/O ≤ 1,5 et des mélanges correspondants
et dans laquelle la composition ne comprend pas de carbonate organique soluble dans l'eau.
